Europäisches Patentamt

European Patent Office

Office européen des brevets

(19)

(11) EP 0 897 563 B1

## (12) FASCICULE DE BREVET EUROPEEN

(45) Date de publication et mention
de la délivrance du brevet:
**24.10.2001 Bulletin 2001/43**

(21) Numéro de dépôt: **97923141.2**

(22) Date de dépôt: **06.05.1997**

(51) Int Cl.⁷: **G06F 13/366**

(86) Numéro de dépôt international:
**PCT/FR97/00802**

(87) Numéro de publication internationale:
**WO 97/42578 (13.11.1997 Gazette 1997/49)**

(54) **PROCEDE POUR SELECTIONNER UN MODULE ELECTRONIQUE PARMI UNE PLURALITE DE MODULES PRESENTS DANS LE CHAMP D'INTERROGATION D'UN TERMINAL**

VERFAHREN ZUR AUSWAHL EINES ELEKTRONISCHEN MODULS AUS MEHREREN IM ABFRAGEFELD EINES ENDGERÄTS

METHOD FOR SELECTING AN ELECTRONIC MODULE FROM A PLURALITY OF MODULES PRESENT IN THE QUERY FIELD OF A TERMINAL

(84) Etats contractants désignés:
**AT BE CH DE ES FR GB IT LI NL**

(30) Priorité: **06.05.1996 FR 9605937**

(43) Date de publication de la demande:
**24.02.1999 Bulletin 1999/08**

(73) Titulaire: **Inside technologies**
**69930 Saint-Clément-les-Places (FR)**

(72) Inventeurs:
• **KOWALSKI, Jacek**
**13530 Trets (FR)**
• **CHARRAT, Bruno**
**13090 Aix en Provence (FR)**
• **BOUYOUX, Eric**
**13320 Bouc Bel Air (FR)**

• **MARTIN, Michel**
**13840 Rognes (FR)**

(74) Mandataire: **Marchand, André**
**OMNIPAT,**
**24 Place des Martyrs de la Résistance**
**13100 Aix-en-Provence (FR)**

(56) Documents cités:
**EP-A- 0 095 337        EP-A- 0 200 365**
**JP-A- 7 154 411        US-A- 4 623 886**
**US-A- 4 789 926**

• **PATENT ABSTRACTS OF JAPAN vol. 17, no. 235 (P-1533), 12 Mai 1993 & JP 04 360259 A (CASIO COMPUTER COMPANY LIMITED), 14 Décembre 1992,**

## Description

La présente invention concerne un procédé pour sélectionner un module électronique parmi une pluralité de modules présents dans le champ d'interrogation d'un terminal, afin d'établir une communication entre le terminal et le module sélectionné.

Dans certaines réalisations, il arrive que plusieurs modules électroniques essaient d'établir au même moment une communication avec un terminal. C'est le cas notamment avec les étiquettes électroniques et les cartes à puce sans contact lorsque plusieurs de ces éléments se trouvent au même instant dans le champ d'interrogation d'un terminal.

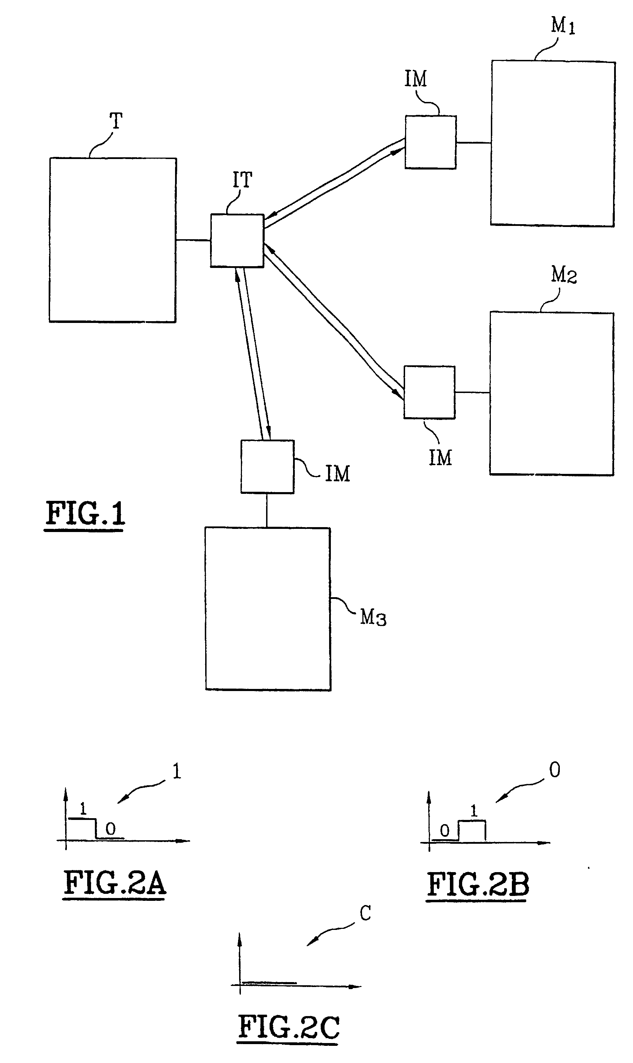

Une telle situation est représentée en figure 1, où l'on voit un terminal T en présence de plusieurs modules électroniques M1, M2, M3. Le terminal T est équipé d'une interface de communication IT lui permettant d'envoyer des messages aux modules et de recevoir des messages émis par ces derniers. Les modules M sont équipés d'interfaces de communication IM leur permettant d'envoyer des messages au terminal et de recevoir des messages du terminal.

Le terminal doit établir une communication avec l'un des modules, sans préférence, afin de réaliser des opérations prévues par l'application, par exemple une transaction monétaire, une opération d'identification en vue de délivrer une autorisation de passage, une opération de péage ou tout simplement une identification des modules présents. Par ailleurs, cette communication, une fois établie, ne doit pas être perturbée par des messages venant d'autres modules. Dans le cas contraire, il se produirait une collision de messages qui se traduirait au niveau du terminal par la réception de signaux perturbés électriquement et de messages entachés d'erreur.

En règle générale, le terminal ne connaît pas l'identité des modules qui sont présents dans son champ d'interrogation. Cela signifie qu'il n'est pas envisageable, en règle générale, que le terminal envoie à un module un message particulier qui permettrait de rendre actif ce module tout en maintenant les autres silencieux. Egalement, il n'est pas envisageable que l'initiative de la communication soit laissée aux modules, car ces derniers émettraient de façon désordonnée des demandes de communication qui entreraient en collision les unes avec les autres ou perturberaient une communication déjà établie avec un autre module. Ainsi, la solution généralement adoptée est que le terminal envoie aux modules un message d'interrogation générale. puis fasse le tri parmi les diverses réponses reçues jusqu'à ce qu'un module et un seul soit sélectionné.

On connaît dans l'art antérieur une méthode de sélection basée sur un surcodage des messages permettant de détecter des collisions bit par bit. Par exemple, comme illustré par les figures 2A et 2B, le "1" logique du codage de base est codé "10" et le "0" logique est codé "01". Ainsi, quand un bit à "1" (codé "10") d'un message émis par un module entre en collision avec un bit à "0" (codé "01") d'un message émis par un autre module, le terminal reçoit un code "00" ou code C de collision, le "0" du codage de base l'emportant sur le "1" (le "0" correspondant par exemple à la masse du circuit).

Pour comprendre la méthode de sélection de l'art antérieur, considérons maintenant à titre d'exemple le cas simple où, en réponse à un message d'interrogation générale, les trois modules de la figure 1 envoient simultanément au terminal les codes d'identification suivants :

| Module 1/code 1 : | 0 | 1 | 0 | 0 |
| Module 2/code 2 | 1 | 1 | 0 | 0 |
| Module 3/code 3 | 1 | 0 | 1 | 1 |

Comme chaque bit d'un code est en collision avec au moins un bit de même rang d'un autre code, le résultat à la réception est le suivant :

C C C C

Le terminal demande alors que les modules ayant envoyé un code d'identification dont le premier bit est à 1 envoient à nouveau ce code (le terminal pourrait aussi, de façon aléatoire, demander que seuls les codes dont le premier bit est à 0 soient renvoyés). Les codes suivants vont être envoyés par les modules concernés :

| Code 2 | 1 | 1 | 0 | 0 |
| Code 3 | 1 | 0 | 1 | 1 |

Le résultat de cette interrogation sélective à la réception est le suivant :

1 C C C,

Comme il n'y a plus de collision sur le premier bit, le terminal va traiter la collision sur le deuxième bit, par exemple en demandant que seuls les messages ayant le deuxième bit à 0 soient renvoyés. Au terme de cette deuxième interrogation sélective, le terminal reçoit le code 3 sans collision et le renvoie vers l'ensemble des modules. Le module M3 l'ayant émis se reconnaît et se trouve sélectionné.

Cette méthode de sélection classique peut être appliquée à un grand nombre de modules mais présente divers inconvénients :

- le processus de sélection est assez lent et nécessite de nombreuses interrogations, chaque nouvelle interrogation permettant statistiquement de ne sélectionner que la moitié des modules sélectionnés à l'interrogation précédente,

- la probabilité d'une collision à la première interrogation ne dépend pas uniquement du nombre de modules effectivement présents dans le champ d'interrogation, mais également du nombre de bits que comprennent les codes d'identification des modules,

- cette méthode n'est pas simple à mettre en oeuvre puisqu'elle nécessite la détection des collisions bit par bit et par conséquent l'utilisation d'un codage particulier des 1 et des 0, comme décrit plus haut,
- cette méthode de sélection par détection des collisions bit par bit nécessite une parfaite synchronisation des différents modules, de manière que les bits des codes d'identification émis par les divers modules soient parfaitement superposés.

Ainsi, un objectif de la présente invention est de prévoir un procédé de sélection qui soit rapide.

Un autre objectif de la présente invention est de prévoir un procédé de sélection qui soit simple à mettre en oeuvre.

Encore un autre objectif de la présente invention est de prévoir un procédé de sélection qui puisse s'appliquer à des modules passablement synchronisés.

Ces objectifs sont atteints grâce à un procédé pour sélectionner un module électronique parmi une pluralité d'au moins deux modules susceptibles d'émettre des messages simultanément, comprenant les étapes consistant à envoyer un message d'interrogation générale aux modules, les modules étant agencés pour, sur réception d'un message d'interrogation, déterminer une position de réponse aléatoire sur une échelle temporelle de réponse puis envoyer un message de réponse quand la position de réponse est atteinte ; sélectionner le module ayant répondu le premier ; placer dans un état de veille les modules n'ayant pas répondu les premiers.

Quand plusieurs modules ont répondu simultanément à un message d'interrogation, il est prévu les étapes consistant à envoyer un message d'interrogation complémentaire aux modules ayant répondu les premiers, sélectionner le module ayant répondu le premier au message d'interrogation complémentaire, et placer dans l'état de veille les modules n'ayant pas répondu les premiers.

Selon un mode de réalisation, un module se place automatiquement dans un état de veille quand il reçoit un message avant d'attendre sa position de réponse.

Selon un mode de réalisation, un module se place également dans un état de veille quand il reçoit un message non identifiable ou non prévu après avoir répondu à un message d'interrogation.

De préférence, l'état de veille est caractérisé au moins par le fait qu'un module ne répond pas à un message d'interrogation complémentaire.

Selon un mode de réalisation, les modules sont agencés pour envoyer, en réponse à un message d'interrogation, un message d'identification comportant des données d'identification.

Selon un mode de réalisation, les modules sont agencés pour envoyer, en réponse à un message d'interrogation, un message de réponse comprenant un faible nombre de bits, une demande d'identification est envoyée aux modules immédiatement après la réception d'au moins un message de réponse, les modules sont agencés pour envoyer, en réponse à la demande d'identification, un message d'identification comportant des données d'identification.

De préférence, il est prévu une étape d'envoi au module sélectionné d'un message de confirmation de sélection comportant des données d'identification du module.

De préférence, les modules sont agencés pour émettre le message de réponse sur une échelle temporelle de réponse comprenant une pluralité de positions de réponse.

La présente invention s'applique notamment à un procédé pour établir une communication entre un terminal et un module électronique, dans lequel, avant de communiquer avec le module, le terminal sélectionne le module au moyen du procédé selon l'invention.

La présente invention concerne également un module électronique, agencé pour, sur réception d'un message d'interrogation ne s'adressant pas en particulier audit module ni en particulier à un autre module, déterminer une position de réponse aléatoire sur une échelle temporelle de réponse puis envoyer un message de réponse quand la position de réponse est atteinte, et se placer dans un état de veille quand un message est reçu avant que la position de réponse ne soit atteinte.

La présente invention concerne également un terminal électronique, agencé pour envoyer un message d'interrogation générale et attendre un message de réponse, détecter une éventuelle collision sur un message reçu, et, si une collision est détectée, envoyer un message d'interrogation complémentaire et attendre un nouveau message de réponse ; si une collision n'est pas détectée, envoyer un message de confirmation de sélection comportant des données d'identification comprises dans un message d'identification reçu.

Ces caractéristiques, avantages, ainsi que d'autres de la présente invention seront exposés plus en détails dans la description suivante du procédé selon l'invention et d'un exemple de mise en oeuvre du procédé, faite à titre non limitatif en relation avec les figures jointes parmi lesquelles :

- la figure 1 précédemment décrite représente un terminal et plusieurs modules,
- les figures 2A à 2C précédemment décrites représentent un codage permettant de détecter bit par bit des collisions de messages,
- les figures 3 et 4 sont des chronogrammes représentant des signaux échangés entre un terminal et des modules conformément au procédé de l'invention,
- la figure 5 est un chronogramme représentant des signaux échangés entre un terminal et des modules conformément à une variante du procédé de l'invention,

- la figure 6 est un diagramme d'états logiques représentant le fonctionnement d'un module selon l'invention, et

- les figures 7 et 8 sont des organigrammes représentant de façon plus détaillée des états du diagramme de la figure 6.

## Principe général de l'invention

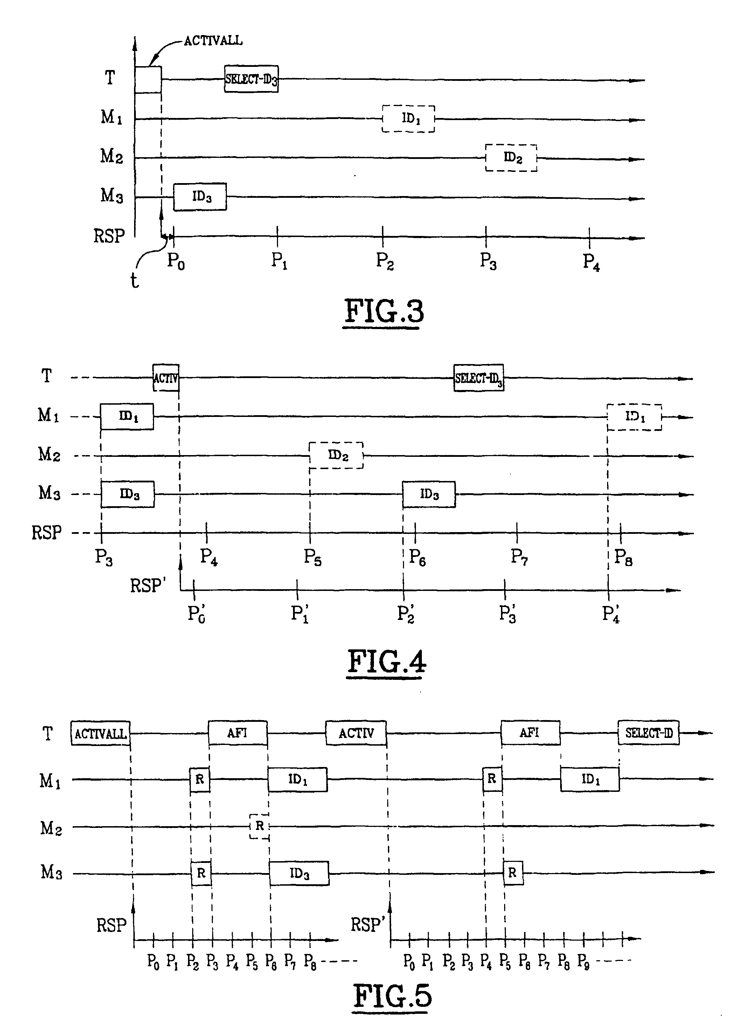

La figure 3 représente les divers messages échangés entre le terminal T et les trois modules M1, M2, M3 de la figure 1, tel que le prévoit la présente invention. Ces messages ont pour but la sélection par le terminal d'un module au hasard parmi l'ensemble des modules présents. Dans un souci de simplicité, on se limitera dans la présente description à des exemples mettant en jeu trois modules seulement, comme on l'a déjà fait au préambule.

Le terminal envoie tout d'abord un signal d'activation ACTIVALL, ou signal d'interrogation générale des modules. Selon l'invention, la réception du message ACTIVALL déclenche dans chaque module une étape de calcul ou de production d'une valeur aléatoire P, de préférence une valeur équiprobable, que l'on appellera par la suite position de réponse. La position de réponse P représente l'instant où chaque module envoie, sur une échelle temporelle de réponse RSP commune à tous les modules, une réponse au message d'interrogation générale. Sur l'échelle RSP représentée en figure 3 figurent les diverses positions de réponse P0, P1, P2, P3... susceptibles d'être calculées aléatoirement par les modules M1 à M3. L'échelle RSP court à compter de la fin du message ACTIVALL mais la première position P0 présente, pour des raisons pratiques (temps d'élaboration par les modules de leurs positions de réponse respectives), un décalage temporel t par rapport à la fin du message ACTIVALL.

Selon l'invention, le module ayant émis le premier une réponse au message ACTIVALL est réputé sélectionné. Dans l'exemple représenté, le module M3 est le premier à répondre et la réponse consiste ici dans l'envoi d'un message d'identification ID3 contenant des données d'identification propres au module, par exemple son numéro de série NS. Sur réception du message ID3, le terminal envoi un message de confirmation de sélection SELECT-ID3. Le message SELECT-ID3 comprend les données d'identification NS comprises dans le message reçu ID3 de sorte que le module M3 peut savoir qu'il est sélectionné. La sélection étant faite, tout type de communication classique peut ensuite se dérouler entre le module M3 et le terminal.

Par ailleurs, on voit sur la figure 3 que les modules M1 et M2 ont élaboré aléatoirement des positions de réponse plus éloignées dans le temps, respectivement P2 et P3. Il est souhaitable que les modules M1 et M2 n'émettent pas leurs réponses ID1 et ID2 lorsque les positions P2, respectivement P3 sont atteintes, afin de ne pas perturber la communication entre le terminal et le module M3. Ainsi, et sous réserve de variantes de réalisation qui seront évoquées plus loin, un module se place dans un état de veille ou état de désélection lorsqu'il reçoit un message quelconque pendant la période d'attente qui précède l'envoi de sa réponse ID. Dans l'exemple représenté, les modules M1 et M2 reçoivent le message SCLECT-ID3 pendant la période d'attente et se désélectionnent d'eux mêmes, D'autres manières de désélectionner les modules peuvent être prévues, par exemple l'envoi par le terminal, à la place du message SELECT-ID3, d'un message explicite de désélection de tous les modules sauf le module M3, du type DESELECT-EXCEPT-ID3.

Bien entendu, il est possible, statistiquement, que deux modules aient élaborés la même position de réponse et que cette position de réponse commune soit la première de toutes les positions de réponse élaborées par les autres modules. Un tel cas est illustré par la figure 4, où les modules M1 et M3 après avoir reçu le message ACTIVALL (non représenté) émettent simultanément leurs messages de réponse/identification ID1 et ID3 sur la position P3, la position de réponse élaborée par le module M2 étant P5. Le terminal reçoit un message perturbé par une collision et émet un message d'interrogation complémentaire ACTIV. A la différence du message ACTIVALL, le message ACTIV ne s'adresse qu'aux modules ayant déjà envoyé leur réponse à l'interrogation générale et provoque la désélection (état de veille) des modules encore en attente d'envoi de la réponse R. Ainsi, sur la figure 4, le message ACTIV a pour effet de désélectionner le module M2, qui n'a pas encore répondu. Par contre, les modules M1 et M3 élaborent de nouvelles positions de réponse aléatoires (respectivement P2' et P4' dans l'exemple représenté) sur une nouvelle échelle de réponse RSP' qui court à compter de la réception du message d'interrogation complémentaire ACTIV. Au terme de ce nouveau cycle de sélection, la probabilité est encore plus élevée qu'un seul module soit sélectionné. Sur l'exemple de la figure 4, le module M3 répond le premier en position P2' et reçoit la confirmation de sélection SELECT-ID3.

En définitive, l'état de veille (ou état de désélection) doit au moins se traduire par le fait qu'un module ne répond pas à un message d'interrogation complémentaire ACTIV. L'état de veille permet d'éliminer les modules n'ayant pas répondu les premiers à l'interrogation générale ACTIVALL ou complémentaire ACTIV précédente.

Avec le procédé de l'invention, la probabilité de non collision Pnc dès la première interrogation (ou probabilité de sélection d'un seul module à la première interrogation) est donnée par la relation suivante :

$$(1) \quad P_{nc} \simeq \frac{m \sum_{i=1}^{Np-1} i^{m-1}}{N p^m}$$

m étant le nombre de modules et Np le nombre de positions que comprend l'échelle de réponse RSP.

Si l'on cherche une grande rapidité de sélection, il est préférable que l'échelle de réponse ne soit pas trop étendue, les positions de réponse du fait de leur caractère aléatoire pouvant être assez éloignées sur l'échelle de réponse et un temps non négligeable pouvant être perdu pendant l'attente de la première réponse. Ainsi, il peut être avantageux de prévoir une échelle de réponse comportant un faible nombre Np de positions de réponse. Le choix du nombre de positions de réponse doit toutefois faire l'objet d'un compromis, en application de la relation (1) qui montre que la probabilité Pnc de non collision à la première interrogation est plus élevée, pour un nombre m de modules donné, quand Np est grand. Par exemple, une échelle de réponse à 16 positions (Np = 16) permet de sélectionner dès la première interrogation un module parmi six modules (m = 6) avec une probabilité très élevée de l'ordre de 0,822.

Un autre avantage du procédé de sélection l'invention est d'être particulièrement rapide lorsque le nombre de modules présents dans le champ d'interrogation du terminal est élevé. Statistiquement, les réponses des modules se répartissent en effet de façon équiprobable sur chacune des positions de réponse. Il en découle que le nombre de modules répondant sur la première position de réponse est, statistiquement, égal à m/Np. Ainsi, une seule interrogation permet de diviser par Np le nombre de modules restant en concurrence pour la sélection.

Par ailleurs, l'étendue de l'échelle de réponse et la rapidité du processus de sélection dépendent également de l'intervalle de temps séparant deux positions de réponse successives $P_i$, $P_{i+1}$. Dans l'exemple qui vient d'être décrit, si l'on veut éviter des collisions partielles entre messages ID, l'intervalle de temps entre deux positions successives n'est pas négligeable et doit au moins permettre à un module d'émettre un message complet de réponse/identification ID. Ainsi, une autre idée de la présente invention est de séparer la fonction "réponse" de la fonction "identification" de manière à comprimer l'échelle de réponse. Cette variante du procédé de l'invention va maintenant être décrite.

**Variante du principe général : compression temporelle de l'échelle de réponse**

La figure 5 illustre une telle variante. En réponse à un message d'interrogation générale ACTIVALL, les modules M1 à M3 émettent, sur la position de réponse qu'ils ont élaboré, un message de réponse R ne comportant pas de données d'identification. Le message R peut être très court et ne comporter qu'un faible nombre de bits, par exemple de un à trois bits selon la technique de transmission utilisée. L'échelle de réponse est ainsi comprimée au maximum comme on le voit sur la figure 5, l'intervalle de temps séparant deux positions successives $P_i$, $P_{i+1}$ étant égal au temps d'émission de la réponse R. Le ou les bits de réponse R peuvent être les mêmes pour tous les modules. Le terminal ne cherche pas à détecter les collisions sur les réponses R (il n'y en aura pas de toute manière si le code de réponse R est identique pour tous les modules) et émet un message de demande d'identification AFI dès que la première réponse R est reçue. Sur réception du message AFI, les modules ayant déjà répondu émettent immédiatement leurs messages d'identification ID. Si deux modules ont répondu simultanément au message ACTIVALL, la collision est détectée par le terminal au moment de la réception des messages d'identification ID. La figure 5 illustre ce dernier cas. Les modules M1 et M3 qui ont la même position de réponse P2 répondent simultanément au message AFI en envoyant les messages d'identification ID1 et ID3. Le terminal reçoit un message perturbé par la collision de ID1 et ID3 et envoie un message d'interrogation complémentaire ACTIV. Les modules M1 et M3 élaborent de nouvelles positions de réponse sur une nouvelle échelle de réponse RSP' qui court à compter de la fin du message ACTIV.

Comme précédemment, un module se place dans l'état de veille quand il reçoit un message ou un commencement de message avant d'avoir émis sa réponse (cas du module M2, figure 5, première interrogation, qui reçoit les premiers bits du message AFI avant d'émettre sa réponse). De plus, ici, il peut arriver qu'un module envoie une réponse R au moment où le message AFI est émis par le terminal. Par exemple, sur la figure 5, deuxième interrogation, le module M3 répond sur la position P5 à l'instant où le terminal émet le message AFI, le module M1 ayant répondu en position P4. Le module M3 doit toutefois être désélectionné (état de veille). Diverses méthodes s'offrent à l'homme de l'art pour désélectionner un module dans une telle situation, notamment :

Méthode i) la longueur de l'intervalle de temps séparant deux positions de réponse successives est choisie d'un bit au moins supérieure à la durée du message de réponse R (étant entendu que le message AFI est toujours envoyé immédiatement après réception de la première réponse R). Cette méthode permet de créer un espace d'écoute entre deux réponses R. Cet espace d'écoute permet de mettre en veille un module qui se prépare à émettre sa réponse sur une position de réponse correspondant sensiblement à l'envoi du message AFI. Par exemple, si l'on applique cette méthode au cas du module M3, deuxième interrogation, figure 5, le module M3 n'enverra pas sa réponse R en position P6 car il détectera le premier bit du message AFI.

Cette méthode peut par exemple être utilisée quand on veut éviter, pour des raisons techniques, que des messages d'interrogation AFI et de réponse R soient émis simultanément (par exemple dans le cas d'une liaison filaire simple entre le terminal et les modules, ne permettant pas le full-duplex). Méthode ii) un module est placé dans l'état de veille quand il reçoit un message non compréhensible après avoir émis sa réponse.

Cette méthode peut être utilisée lorsqu'un module n'est pas capable, pour des raisons techniques, de recevoir les premiers bits du message AFI pendant qu'il émet sa réponse R, le message AFI étant alors reçu de façon incomplète et incompréhensible. Par exemple sur la figure 5, deuxième interrogation, le module M3 ne perçoit que les derniers bits du message AFI et ne comprend pas le message reçu. Il se place dans l'état de veille. Méthode iii) un module est placé dans l'état de veille quand il reçoit un message non prévu après avoir émis sa réponse ou pendant qu'il émet sa réponse.

Cette méthode correspond au cas le plus général où un module est capable de recevoir et d'identifier un message, notamment le message AFI, pendant qu'il émet sa réponse. Par exemple sur la figure 5, deuxième interrogation, le module M3 reçoit les premiers bits du message AFI pendant qu'il émet sa réponse R, mais constate que le message AFI ne devrait pas être reçu à cet instant. Il se place dans l'état de veille.

Bien entendu, ces diverses méthodes permettant de placer un module dans l'état de veille, ainsi que d'autres, peuvent être combinées.

**Exemple de mise en oeuvre du procédé de l'invention**

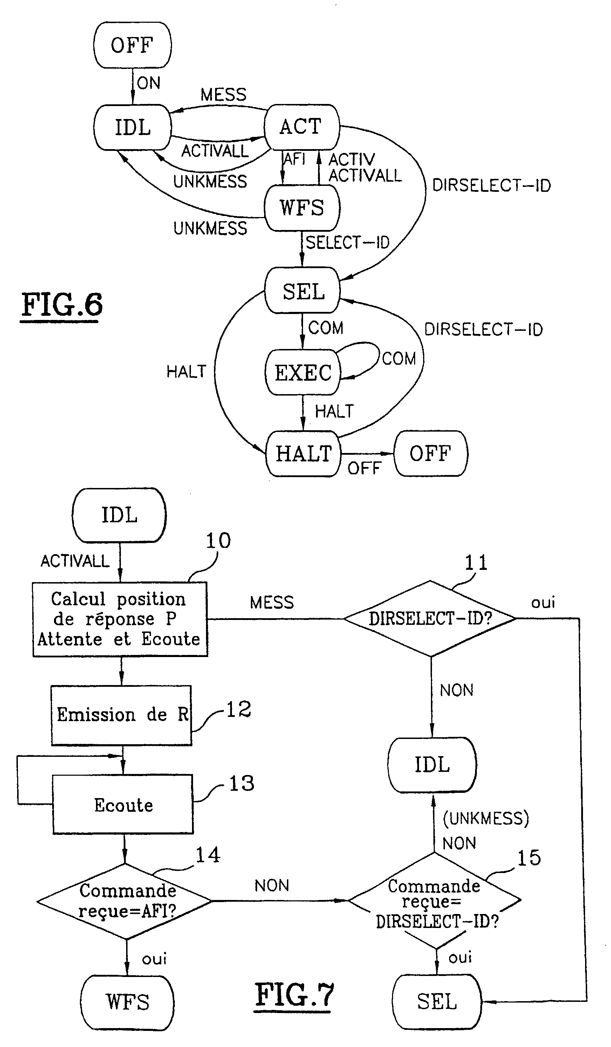

La figure 6 est un diagramme d'états logiques représentant à titre d'exemple et de façon simplifiée le fonctionnement d'un module selon l'invention, conformément à la variante du procédé de l'invention illustrée par la figure 5.
On distingue sept états logiques :
**Etat OFF** (désactivé) : le module est désactivé et ne peut répondre à aucun message. En pratique, cet état peut correspondre à un état non alimenté (power off). Par exemple, lorsque le module est un microcircuit d'une carte à puce sans contact alimentée par un champ magnétique alternatif émis par le terminal, le module est dans l'état OFF lorsqu'il est en dehors du champ d'alimentation émis par le terminal (généralement de l'ordre de la dizaine de centimètres).
**Etat IDL** (veille): le module est alimenté mais se trouve dans un état de veille (ou état de désélection) et ne peut sortir de cet état que par la réception d'un message d'activation/interrogation générale ACTIVALL. Le mode veille est par exemple celui dans lequel se trouve un microcircuit de carte à puce sans contact en présence d'un champ d'alimentation inductif émis par un terminal, le microcircuit étant alimenté mais pas encore actif.
**Etat ACT** (actif) : le module bascule dans cet état lorsqu'il reçoit un message ACTIVALL. Le module réalise alors les étapes suivantes, représentées en figure 7 :

-    étape 10 : le module calcule ou élabore une position de réponse P et attend le moment où la réponse R doit être émise. Pendant cette attente, le module reste à l'écoute des messages pouvant être envoyés par le terminal. Si le module reçoit un message quelconque MESS alors que la réponse R n'est pas encore envoyée, le module se désélectionne et revient à l'état IDL. Comme représenté en figure 7, on peut toutefois prévoir que le module, avant de se désélectionner, vérifie au cours d'une étape de test 11 que le message MESS reçu n'est pas un message de sélection directe DIRSELECT-ID comportant des données d'identification NS qui sont les siennes. Le cas échéant, le module bascule directement dans un état SEL (sélectionné) qui sera décrit plus loin.

étape 12 : la position de réponse P est atteinte et le module envoie la réponse R.
étape 13 : le module attend un message du terminal.
étapes de test 14 et 15 : le module a reçu un message et cherche à reconnaître ce message. Si le message reçu est une demande d'identification AFI, le module bascule dans un état WFS décrit ci-après. Si le message reçu est une sélection directe DIRSELECT-ID qui le désigne, le module bascule dans l'état SEL. Sinon, le message est un message UNKMESS inconnu ou qui n'est pas prévu à cette étape de fonctionnement, et le module se désélectionne en revenant à l'état IDL.

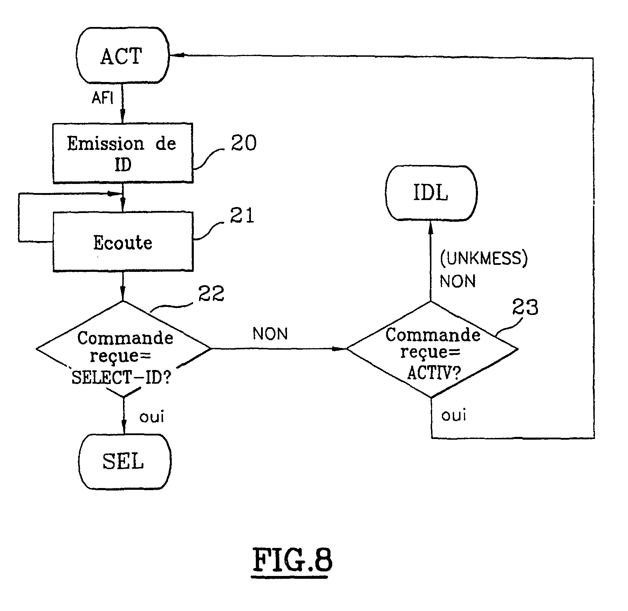

**Etat WFS** (attente de sélection) : le module bascule dans cet état lorsqu'il reçoit le message AFI alors qu'il est à l'étape 13 de l'état ACT. Le module réalise les étapes suivantes, représentées sur la figure 8 :

étape 20 : le module envoi un message d'identification ID. Comme on l'a déjà indiqué, le message ID comprend des données propres au module, comme son numéro de série.
étape 21 : le module attend un message.
étape de test 22 et 23 : le module a reçu un message et cherche à le reconnaître. Si le message reçu est un message de sélection SELECT-ID le désignant, le module bascule dans l'état SEL décrit ci-après. Si le message est une interrogation complémentaire ACTIV (le terminal a perçu une collision) le module revient à l'état ACT pour élaborer une nouvelle position de réponse P. Enfin, si le message n'est pas identifiable ou n'est pas prévu à ce stade du fonctionnement (message UNKMESS), le module se désélectionne en revenant à l'état IDL.

**Etat SEL** (sélectionné) : lorsque le module est dans l'état sélectionné, on peut considérer que la communication est établie avec le terminal, les autres modules restant silencieux. Le terminal envoie au module une première commande fonctionnelle COM qui fait basculer le module dans un état d'exécution EXEC.

**Etat EXEC** (exécution) : cet état est en lui-même classique. Le module exécute des commandes fonctionnelles COM pour lesquelles il a été conçu, qui peuvent être de tout type (transaction, authentification, péage, etc.)

**Etat HALT** (blocage) : à tout instant à compter du moment où les états SEL ou EXEC sont atteints, le terminal peut bloquer le module en lui envoyant le message HALT, par exemple lorsque la communication est terminée. L'état de blocage HALT est un état d'inhibition dans lequel le module ne répond plus à des interrogations générales ACTIVALL ou complémentaires ACTIV. Ainsi, le module ne sera pas à nouveau mis en jeu lors de la sélection suivante d'un module, au bénéfice des modules n'ayant pas encore communiqué avec le terminal. Pour que le module revienne dans l'état IDL, il faut tout d'abord qu'il passe par l'état OFF c'est-à-dire qu'il soit désactivé. En pratique, cela peut par exemple signifier que l'utilisateur d'une carte à puce sans contact qui a déjà réalisé une transaction doit, s'il veut réaliser une nouvelle transaction, éloigner sa carte du champ magnétique d'alimentation et la présenter à nouveau.

Il va de soi que le procédé de l'invention est susceptible de nombreuses variantes et modes de réalisation, notamment les variantes suivantes :

- le terminal pourrait forcer un module à quitter l'état HALT, par exemple en lui envoyant un message de sélection directe DIRSELECT-ID comme illustré en figure 6, ou, dans le cas d'une alimentation par champ magnétique, en supprimant un bref instant le champ d'alimentation,

- un module dans l'état ACT recevant un message ACTIV ou ACTIVALL pendant l'attente qui précède l'envoi de sa réponse R pourrait rester dans l'état ACT au lieu de revenir à l'état de veille IDL,

- un module dans l'état de veille IDL pourrait basculer dans l'état de sélection SEL sur réception d'un message de sélection directe DIRSELECT-ID le désignant,

- un message d'interrogation générale ACTIVALL ou complémentaire ACTIV pourrait renvoyer dans l'état ACT un module se trouvant dans l'état WFS, SEL ou EXEC.

Enfin, on peut parfaire l'opération de sélection en prévoyant qu'un module ayant reçu une confirmation de sélection SELECT-ID envoie au terminal un message (par exemple un code de réponse R) lui signifiant qu'il est effectivement sélectionné.

**Aspects pratiques et technologiques de la mise en oeuvre de l'invention**

**a - Détermination par les modules de la position de réponse**

Pour déterminer une position de réponse, un module doit tout d'abord élaborer un nombre aléatoire ALINT, la position de réponse P étant égale au nombre aléatoire ALINT multiplié par une base de temps commune à tous les modules. En pratique, le déclenchement du message de réponse R ou de réponse/identification ID peut être obtenu par une temporisation ou tout simplement au moyen d'un circuit décompteur chargé à la valeur ALINT et commandé par un signal d'horloge H commun à tous les modules (voir toutefois plus loin le paragraphe "synchronisation des modules").

Pour générer le nombre ALINT, les modules doivent en principe être équipés d'un générateur aléatoire ou pseudo-aléatoire. Toutefois, la présente invention prévoit une solution avantageuse applicable aux modules équipés d'une fonction d'authentification permettant de lutter contre la fraude.

Rappelons ici qu'une fonction d'authentification, ou fonction cryptographique, permet de transformer un mot binaire ou code d'entrée CE en un autre mot binaire ou code d'authentification CA de la forme :

$$(2)\ CA = F_{Ks}\ (CE)$$

$F_{Ks}$ représentant la fonction d'authentification et Ks la clé secrète de cette fonction. De façon classique, une procédure d'authentification consiste dans l'envoi par le terminal d'un code d'entrée CE. Sur réception du code CE, le module élabore le code d'authentification CA et l'envoie au terminal. Le terminal, qui dispose de la fonction $F_{Ks}$, vérifie l'exactitude du code CA avant d'exécuter toute opération demandée par le module. Une telle procédure d'authentification, quand elle est prévue, se déroule au stade de l'état EXEC, c'est-à-dire lorsque le module est sélectionné.

Ici, une idée de l'invention est d'utiliser la fonction d'authentification des modules pour générer le nombre aléatoire ALINT. L'avantage est qu'il n'est plus nécessaire de prévoir, dans chaque module, un générateur de nombre aléatoire. Plus particulièrement, selon l'invention, le terminal incorpore dans le message d'activation générale ACTIVALL ou particulière ACTIV un code aléatoire ALEXT qu'il a lui-même élaboré. Chaque module transforme le code aléatoire ALEXT en un autre code aléatoire ALINT au moyen de la fonction d'authentification dont il est équipé :

$$ALINT = F_{Ks} (ALEXT)$$

Le code aléatoire ALINT ou une fraction de ce code est utilisée pour déterminer la position de réponse. Bien entendu, cette solution suppose que chaque module possède une clé secrète Ks particulière, ce qui est généralement le cas en pratique, sans quoi toutes les positions de réponse calculées à partir du code ALEXT seraient les mêmes.

**b - Synchronisation des modules sur l'échelle de réponse**

Dans certaines réalisations, les modules sont environnés par un champ magnétique alternatif dont la fréquence d'oscillation donne le signal d'horloge, et se trouvent ainsi naturellement synchronisés. Dans d'autres réalisations, les modules possèdent chacun un oscillateur qui génère le signal d'horloge et ne peuvent être parfaitement synchronisés en raison des tolérances de fonctionnement propres à chaque oscillateur. Toutefois, un avantage inhérent au procédé de l'invention est de pouvoir être appliqué à des modules passablement synchronisés. En effet, en pratique, la fréquence d'horloge est généralement plus élevée que la fréquence d'émission des bits constituant les messages, un bit pouvant représenter quelques dizaines ou quelques centaines de coups d'horloge, de sorte qu'un certain décalage d'horloge entre les modules peut être toléré. D'autre part, chaque échelle de réponse RSP, RSP',... court à compter de la fin du dernier message ACTIVALL ou ACTIV reçu, de sorte que les modules sont automatiquement recalés à chaque nouvelle échelle de réponse. Ainsi, avec l'invention, des dérives d'horloge ne peuvent conduire à des défauts de synchronisation importants. En pratique, il suffira que les oscillateurs des modules soient calés sensiblement sur la même fréquence, même si les tolérances de fonctionnement des oscillateurs entraînent des décalages d'horloge de l'ordre de quelques pulsations.

**c - Utilité de l'échelle de réponse**

L'échelle de réponse offre l'avantage de simplifier la mise en oeuvre du procédé de l'invention en évitant des cas de collisions qui seraient assez complexes à traiter. Toutefois, il apparaîtra clairement à l'homme de l'art que le procédé de sélection selon l'invention pourrait être mis en oeuvre sans une telle échelle de réponse, les divers modules pouvant alors émettre les réponses R de façon purement aléatoire et être entièrement désynchronisés.

**d - Technologie des modules**

Comme cela apparaîtra clairement à l'homme de l'art, la présente invention peut être mise en oeuvre aussi bien au moyen de circuits à microprocesseur qu'au moyen de circuits à logique câblée. En effet, la gestion des états logiques des modules et des transitions entre ces états peut être assurée aussi bien par un logiciel que par un séquenceur câblé. Dans le premier cas, les divers états logiques sont matérialisés par des sous-programmes et dans le deuxième cas par des bits d'état (ou flags) disposés dans un registre particulier et conditionnant le fonctionnement du séquenceur câblé.

**e - Détection des collisions par le terminal**

Il ressort de ce qui précède que le terminal doit pouvoir détecter des collisions de messages émis par les modules, en particulier des collisions entre messages d'identification ID. Toutefois, à la différence du procédé de l'art antérieur, il n'est pas nécessaire que la détection de collisions soit réalisée bit par bit. Une détection globale des collisions est suffisante, par exemple au moyen d'une méthode classique de signature des messages ou encore par une détection des anomalies apparaissant dans les tensions électriques représentant les niveaux logiques des bits constituant les messages reçus par le terminal.

**f - Domaines d'application**

La présente invention a été conçue et mise au point en tant qu'alternative à la méthode de tri de l'art antérieur décrite au préambule. Elle concerne en premier lieu le domaine des étiquettes électroniques sans contact, des cartes à puce dans contact, etc. Toutefois, la méthode de sélection de l'invention est susceptible de s'appliquer à tout système mettant en jeu une liaison multipoint entre un terminal et des modules périphériques, que cette liaison soit filaire ou sans contact, par exemple du type infrarouge, hyperfréquence, inductive, radio, etc.

**Revendications**

1. Procédé pour sélectionner un module électronique (M) parmi une pluralité d'au moins deux modules (M1, M2, M3) susceptibles d'émettre des messages simultanément, **caractérisé en ce qu'**il comprend les étapes consistant à :

   - envoyer un message d'interrogation générale (ACTIVALL) auxdits modules,
     les modules étant agencés pour, sur réception d'un message d'interrogation (ACVTIVALL, ACTIV), déterminer une position de réponse (P) aléatoire sur une échelle temporelle de réponse (RSP), puis envoyer un message de réponse (ID, R) quand la position de réponse (P) est atteinte,

- sélectionner (AFI, SELECT-ID) le module ayant répondu le premier,
- placer dans un état de veille (IDL) les modules n'ayant pas répondu les premiers.

**2.** Procédé selon la revendication 1 dans lequel, quand plusieurs modules ont répondu simultanément à un message d'interrogation (ACTIVALL, ACTIV), il est prévu les étapes consistant à :

- envoyer un message d'interrogation complémentaire (ACTIV) aux modules ayant répondu les premiers,
- sélectionner (AFI, SELECT-ID) le module ayant répondu le premier au message d'interrogation complémentaire,
- placer dans l'état de veille (IDL) les modules n'ayant pas répondu les premiers.

**3.** Procédé selon l'une des revendications précédentes, dans lequel un module se place automatiquement dans un état de veille (IDL) quand il reçoit un message (MESS) avant d'atteindre sa position de réponse (P).

**4.** Procédé selon la revendication 3, dans lequel un module se place également dans un état de veille quand il reçoit un message non identifiable ou non prévu (UNKMESS) après avoir répondu à un message d'interrogation (ACTIVALL, ACTIV).

**5.** Procédé selon l'une des revendications précédentes, dans lequel l'état de veille est **caractérisé** au moins par le fait qu'un module ne répond pas à un message d'interrogation complémentaire (ACTIV).

**6.** Procédé selon l'une des revendications 1 à 5, dans lequel les modules sont agencés pour envoyer, en réponse à un message d'interrogation (ACTIV, ACTIVALL), un message d'identification (ID) comportant des données d'identification (NS).

**7.** Procédé selon l'une des revendications 1 à 5, dans lequel :

- les modules sont agencés pour envoyer, en réponse à un message d'interrogation (ACTIV, ACTIVALL), un message de réponse (R) comprenant un faible nombre de bits,
- une demande d'identification (AFI) est envoyée aux modules immédiatement après la réception d'au moins un message de réponse (R),
- les modules sont agencés pour envoyer, en réponse à ladite demande d'identification (AFI), un message d'identification (ID) comportant des données d'identification (NS).

**8.** Procédé selon l'une des revendications 6 et 7, dans lequel un message d'interrogation complémentaire (ACTIV) est envoyé quand il est reçu de la pluralité de modules plusieurs messages d'identification (ID).

**9.** Procédé selon l'une des revendications précédentes, comprenant une étape d'envoi au module sélectionné d'un message de confirmation de sélection (SELECT-ID) comportant des données d'identification (NS) du module.

**10.** Procédé selon l'une des revendications précédentes, dans lequel les modules sont agencés pour émettre ledit message de réponse (ID, R) sur une échelle temporelle de réponse (RSP) comprenant une pluralité (Np) de positions de réponse (P0, P1, P2...).

**11.** Procédé selon la revendication 10, dans lequel la durée d'un message de réponse (ID, R) est au maximum égale à l'intervalle de temps séparant deux positions de réponse successives ($P_i$, $P_{i+1}$).

**12.** Procédé selon l'une des revendications 10 et 11, dans lequel ladite position de réponse (P) est élaborée par les modules à partir d'un code aléatoire (ALEXT) inclus dans le message d'interrogation (ACTIVALL, ACTIV).

**13.** Procédé selon la revendication 12, dans lequel la position de réponse (P) est élaborée par les modules au moyen d'une fonction d'authentification ($F_{Ks}$).

**14.** Procédé pour établir une communication entre un terminal et un module électronique **caractérisé en ce que**, avant de communiquer avec le module, le terminal sélectionne le module au moyen du procédé selon l'une des revendications précédentes.

**15.** Procédé selon la revendication 14, dans lequel un module sélectionné est placé dans un état de blocage (HALT) après une communication.

**16.** Module électronique, **caractérisé en ce qu'**il est agencé pour, sur réception d'un message d'interrogation (ACTIV, ACTIVALL) ne s'adressant pas en particulier audit module ni en particulier à un autre module :

- déterminer une position de réponse (P) aléatoire sur une échelle temporelle de réponse (RSP), puis envoyer un message de réponse (ID, R) quand la position de réponse (P) est atteinte,

- se placer dans un état de veille (IDL) quand un message (MESS) est reçu avant que la position de réponse (P) ne soit atteinte.

17. Module électronique selon la revendication 16, agencé pour se placer également dans ledit état de veille (IDL) quand un message non identifiable ou non prévu (UNKMESS) est reçu après avoir répondu à un message d'interrogation (ACTIVALL, ACTIV).

18. Terminal électronique, **caractérisé en ce qu'**il est agencé pour :

- envoyer un message d'interrogation générale (ACTIVALL, ACTIV) et attendre un message de réponse (ID, R),
- détecter une éventuelle collision sur un message (ID) reçu,
- si une collision est détectée, envoyer un message d'interrogation complémentaire (ACTIV) et attendre un nouveau message de réponse (ID, R),
- si une collision n'est pas détectée, envoyer un message de confirmation de sélection (SELECT-ID) comportant des données d'identification (NS) comprises dans un message d'identification (ID) reçu.

19. Terminal selon la revendication 18, agencé pour envoyer une demande d'identification (AFI) sur réception d'un message de réponse (R).

20. Terminal selon l'une des revendications 18 et 19, agencé pour inclure un code aléatoire (ALEXT) dans un message d'interrogation (ACTIVALL, ACTIV).

**Patentansprüche**

1. Verfahren zum Auwählen eines elektronischen Moduls (M) aus einer Mehrzahl von mindestens zwei Modulen (M1, M2, M3) mit der Fähigkeit zum gleichzeitigen Abgeben von Meldungen, **dadurch gekennzeichnet, dass** es folgende Schritte enthält:

Senden einer allgemeinen Abfragemeldung (AKTIVAL) an die Module, derart, dass die Module - bei Empfang einer Abfragemeldung (AKTIVAL, AKTIV) ausgebildet sind zum Bestimmen einer zufälligen Antwortposition (P) auf einer zeitweisen Antwortskala (RSP), und anschließend zum Senden einer Antwortmeldung (ID, R), wann die Antwortposition (P) erreicht wird;

Auswählen (AFI, SELECT-ID) des Moduls, das als erstes geantwortet hat;

Platzieren der Module, die nicht als erstes geantwortet haben, in einen Wach- bzw. Wartezustand (IDL).

2. Verfahren nach Anspruch 1, **dadurch gekennzeichnet, dass** dann, wenn mehrere Module gleichzeitig auf eine Abfragemeldung (AKTIVAL, AKTIV) geantwortet haben, folgende Schritte vorgesehen sind:

Senden einer ergänzenden Abfragemeldung (AKTIV) an die Module, die als erstes geantwortet haben;

Auswählen (AFI, SELECT-ID) desjenigen Moduls, das als erstes auf die ergänzende Abfragemeldung geantwortet hat;

Platzieren der Module, die nicht als erstes geantwortet haben, in einen Wartezustand (IDL).

3. Verfahren nach einem der vorangehenden Ansprüche, **dadurch gekennzeichnet, dass** sich ein Modul automatisch in den Wachzustand (IDL) versetzt, wenn es eine Meldung (MESS) empfängt, bevor es seine Antwortposition (P) einholt.

4. Verfahren nach Anspruch 3, **dadurch gekennzeichnet, dass** sich ein Modul ebenso in einem Wartezustand versetzt, wenn es eine nicht identifizierbare oder eine nicht vorgesehene (UNKMESS) Meldung empfängt, nachdem es auf eine Abfragemeldung geantwortet hat (AKTIVAL, AKTIV).

5. Verfahren nach einem der vorangehenden Ansprüche, **dadurch gekennzeichnet, dass** der Wartezustand zumindest durch die Tatsache **gekennzeichnet** ist, dass ein Modul nicht auf eine ergänzende Abfragemeldung (AKTIV) antwortet.

6. Verfahren nach einem der vorangehenden Ansprüche 1 bis 5, **dadurch gekennzeichnet, dass** die Module ausgebildet sind, um als Antwort auf eine Abfragemeldung (AKTIV, AKTIVAL) eine Identifikationsmeldung (ID) mit Identifikationsdaten (NS) zu senden.

7. Verfahren nach einem der Ansprüche 1 bis 5, **dadurch gekennzeichnet, dass**

die Module ausgebildet sind, damit sie als Antwort auf eine Abfragemeldung (AKTIV, AKTIVAL) eine Antwortmeldung mit einer niedrigen Bitzahl zu senden,

eine Identifikationsanfrage (AFI) zu den Modulen unmittelbar nach Empfang mindestens einer Antwortmeldung (R) gesendet wird,

die Module ausgebildet sind, um als Antwort auf die Identifikationsanfrage (AFI) eine Identifikationsmeldung (ID) mit Identifikationsdaten (NS) zu senden.

8.  Verfahren nach einem der Ansprüche 6 oder 7, **dadurch gekennzeichnet, dass** eine ergänzende Abfragemeldung (AKTIV) gesendet wird, wenn von der Mehrzahl der Module mehrere Identifikationsmeldungen (ID) empfangen werden.

9.  Verfahren nach einem der vorangehenden Ansprüche, **dadurch gekennzeichnet, dass** ein Schritt vorgesehen ist, gemäss dem ein ausgewähltes Modul eine Meldung zum Bestätigen der Auswahl (SLICT-ID) sendet, mit Identifikationsdaten (NS) des Moduls.

10. Verfahren nach einem der vorangehenden Ansprüche, **dadurch gekennzeichnet, dass** die Module ausgebildet sind, um die Antwortmeldung (ID, R) aus einer zeitweisen Antwortskala (RSP) auszusenden, die mehrere (Np) Antwortpositionen (P0, P1, P2, ...) enthält.

11. Verfahren nach Anspruch 10, **dadurch gekennzeichnet, dass** die Dauer einer Antwortmeldung (ID, R) maximal gleich einem Zeitintervall zum Trennen zweier Positionen aufeinanderfolgender Antworten ($P_i$, $P_{i+1}$) ist.

12. Verfahren nach Anspruch 10 oder 11, **dadurch gekennzeichnet, dass** die Antwortpositionen (P) durch die Module verarbeitet wird, ausgehend von einem Zufallscode (ALEXT), der in der Abfragemeldung (AKTIVAL, AKTIV) enthalten ist.

13. Verfahren nach Anspruch 12, **dadurch gekennzeichnet, dass** die Antwortposition (P) durch die Module mindestens mit einer Authentisierungsfunktion ($F_{Ks}$) verarbeitet wird.

14. Verfahren zum Einrichten einer Kommunikation zwischen einem Endgerät und einem elektronischen Modul, **dadurch gekennzeichnet, dass** vor der Kommunikation mit dem Modul das ausgewählte Terminal bzw. das Modul zumindest ein Verfahren gemäss einem der vorangehenden Ansprüche ausführen.

15. Verfahren nach Anspruch 14, **dadurch gekennzeichnet, dass** das ausgewählte Modul nach einer Kommunikation in einen Blockierzustand (HALT) platziert wird.

16. Elektronisches Modul, **dadurch gekennzeichnet, dass** es ausgebildet ist, um bei Empfang einer Abfragemeldung (AKTIV, AKTIVAL), die weder an das Modul noch insbesondere an ein anderes Modul gerichtet ist, folgende Schritte auszuführen:

Bestimmen einer zufälligen Antwortposition (P) bei einer zeitweisen Antwortskala (RSP), anschließend Senden einer Antwortmeldung (ID, R), wenn die Antwortposition (P) bestimmt ist,

Platzieren in einem Wartezustand (IDL), wenn eine Meldung (MIS) empfangen wird, bevor die Antwortposition (P) nicht eingeholt ist.

17. Elektronisches Modul nach Anspruch 16, **dadurch gekennzeichnet, dass** es ausgebildet ist, um sich ebenso in dem Wartezustand (IDL) zu versetzen, wenn eine nicht identifizierbare oder vorhergesehene Meldung (UNKMS) empfangen wird, nachdem eine Antwort auf eine Abfragemeldung (AKTIVAL, AKTIV) erfolgt.

18. Elektronisches Terminal, **dadurch gekennzeichnet, dass** es ausgebildet ist zum:

Senden einer allgemeinen Abfragemeldung (AKTIVAL, AKTIV) und Warten auf eine Antwortmeldung (ID, R),

Detektieren einer gegebenenfalls vorliegenden Kollision bei einer empfangenen Meldung (ID),

in dem Fall, in dem eine Kollision detektiert wird, Senden einer ergänzenden Abfragemeldung (AKTIV) und erneutes Warten auf eine Antwortmeldung (ID, R),

in dem Fall, in dem eine Kollision nicht detektiert wird, Senden einer Bestätigungsmeldung für die Auswahl (SELECT-ID) mit Identifikationsdaten (NS), die in einer empfangenen Identifikationsmeldung (ID) enthalten sind.

19. Terminal nach Anspruch 18, **dadurch gekennzeichnet, dass** es zum Senden einer Identifikationsanforderung (AFI) bei Empfang einer Antwortmeldung (RL) ausgebildet ist.

20. Terminal nach Anspruch 18 oder 19, **dadurch gekennzeichnet, dass** es zum Einschließen eines Zufallscodes (ALEXT) in eine Abfragemeldung (AKTIVAL, AKTIV) ausgebildet ist.

## Claims

1.  Process for selecting an electronic module (M) from amongst a plurality of at least two modules (M1, M2, M3) which are liable to emit messages simultaneously, **characterised in that** it comprises the steps consisting of:

- sending a general interrogation message (ACTIVALL) to the said modules,
- the modules being arranged, on reception of an interrogation message (ACTIVALL, ACTIV), to determine a random response position (P) on a response time scale (RSP), then send a response message (ID, R) when the response position (P) is reached,
- selecting (AFI, SELECT-ID) the module which was the first to respond,
- putting into a state of readiness (IDL) the modules which were not the first to respond.

2. Process according to Claim 1 in which , when several modules have responded to an interrogation message (ACTIVALL, ACTIV) simultaneously, the following steps are taken:-

- sending a complementary interrogation message (ACTIV) to the first modules to respond,
- selecting (AFI, SELECT-ID) the module which responded first to the complementary interrogation message,
- putting in a state of readiness (IDL) the modules which were not first to respond.

3. Process according to one of the foregoing claims, in which a module automatically adopts a state of readiness (IDL) when it receives a message (MESS) before reaching its response position (P).

4. Process according to Claim 3, in which a module likewise adopts a state of readiness when it receives a message which is unidentified or unexpected (UNKMESS) after having responded to an interrogation message (ACTIVALL, ACTIV).

5. Process according to one of the foregoing claims, in which the state of readiness is **characterised** at least by the fact that a module does not respond to a complementary interrogation message (ACTIV).

6. Process according to one of Claims 1 to 5, in which the modules are arranged to send, in response to an interrogation message (ACTIV, ACTIVALL), an identification message (ID) containing identifying data (NS).

7. Process according to one of Claims 1 to 5, in which:-

- the modules are arranged to send, in response to an interrogation message (ACTIV, ACTIVALL), a response message (R) having a small number of bits,
- a request for identification (AFI) is sent to the modules immediately after the reception of at least one response message (R),
- the modules are arranged to send, in response to the said request for identification (AFI), an identification message (ID) containing identification data (NS).

8. Process according to one of Claims 6 and 7, in which a complementary interrogation message (ACTIV) is sent when there are received from the plurality of modules several identification messages (ID).

9. Process according to one of the foregoing claims, including a step of sending to the selected module a message confirming the selection (SELECT-ID) containing the identification data (NS) of the module.

10. Process according to one of the foregoing claims, in which the modules are arranged to deliver the said response message (ID, R) on a time response scale (RSP) having a plurality (Np) of response positions (P0, P1, P2,...)..

11. Process according to Claim 10, in which the duration of a response message (ID, R) is at the most equal to the interval of time separating two successive response positions ($P_i$, $P_{i+1}$).

12. Process according to one of Claims 10 and 11, in which the said response position (P) is elaborated or refined by the modules making use of a random code (ALEXT) included in the interrogation message (ACTIVALL, ACTIV).

13. Process according to Claim 12, in which the response position (P) is elaborated or refined by the modules by means of an authentification function ($F_{Ks}$).

14. Process for establishing communication between a terminal and an electronic module **characterised in that** , before communicating with the module, the terminal selects the module by means of the process according to one of the foregoing claims.

15. Process according to Claim 14, in which a module which has been selected is put in a blocked state after a communication.

16. Electronic module, **characterised in that** it is arranged so that, on receipt of an interrogation message (ACTIV, ACTIVALL), which is not addressing the said module in particular nor any other module in particular:

- it determines a random response position (P) on a response time scale (RSP), then sends a response message (ID, R) when the response position is reached,
- it adopts a state of readiness (IDL) when a message (MESS) is received before the response position (P) is reached.

**17.** Electronic module according to Claim 16, arranged to adopt likewise the said state of readiness (IDL) when an unidentified or unexpected message (UNKMESS) is received after having responded to an interrogation message (ACTIVALL, ACTIV).

**18.** Electronic terminal, **characterised in that** it is arranged to:

- send a general interrogation message (ACTIVALL, ACTIV) and await a response message (ID, R),
- detect the existence of any conflict with a message (ID) received,
- if a conflict is detected, send a complementary interrogation message (ACTIV) and await a fresh response message (ID, R),
- if no conflict is detected, send a message confirming selection (SELECT-ID) having identification data (NS) contained in an identification message (ID) received.

**19.** Terminal according to Claim 18, arranged to send a request for identification (AFI) on receipt of a response message (R).

**20.** Terminal according to one of Claims 18 and 19, arranged to include a random code (ALEXT) in an interrogation message (ACTIVALL, ACTIV).

M₁

IM

T

IT

M₂

IM

**FIG.1**

IM

M₃

1

1

0

**FIG.2A**

0

0

1

**FIG.2B**

C

**FIG.2C**

**FIG.3**

**FIG.4**

**FIG.5**

FIG.6

FIG.7

## FIG.8